# EUROPÄISCHE PATENTSCHRIFT

(11) **EP 1 077 163 B1**
(45) Veröffentlichungstag und Bekanntmachung des Hinweises auf die Patenterteilung: **07.06.2006**
(21) Anmeldenummer: 00117286.5
(22) Anmeldetag: 17.08.2000
(51) Int. Cl.: B60R 21/20

(54) **Zugeschnittenes Leder für eine Abdeckung eines Insassen-Rückhaltemoduls, Abdeckung, Verfahren zum Zuschneiden des Leders und Vorrichtung hierfür**
Precut leather trim for a vehicle occupant restraint module cover, cover, process for cutting the leather and device therefor
Cuir avec découpes pour couvercle de système de retenue de passager, couvercle, procédé de découpage du cuir et dispositif approprié

(30) Priorität: 18.08.1999 DE 19939034
(43) Veröffentlichungstag der Anmeldung: 21.02.2001
(73) Patentinhaber: TRW Automotive Safety Systems GmbH, 63743 Aschaffenburg (DE)
(72) Erfinder: Hehl, Achim, 63768 Hösbach (DE); Werner, Heribert, 63796 Kahl (DE); Hattermann, Ferdinand, 63179 Obertshausen (DE)
(74) Vertreter: Kitzhofer, Thomas

(56) Entgegenhaltungen:
- WO-A-00/32368
- DE-A- 19 829 752
- DE-A- 19 910 141
- PATENT ABSTRACTS OF JAPAN vol. 1997, no. 11, 28. November 1997 (1997-11-28) & JP 09 183373 A (TOKYO SEAT KK), 15. Juli 1997 (1997-07-15)

## Beschreibung

Die Erfindung betrifft eine Abdeckung für ein Fahrzeuginsassen-Rückhaltemodul nach dem Oberbegriff des Anspruchs 1 und ein Verfahren zum Herstellen einer Abdeckung eines Fahrzeuginsassen-Rückhaltemoduls.

Gassack-Modulabdeckungen werden außenseitig zunehmend mit Leder bezogen, um dem Fahrzeug ein höherwertiges Aussehen zu verleihen. Dies trifft insbesondere für die Abdeckungen von im Fahrzeuglenkrad untergebrachten Gassackmodulen zu. Unter den Begriff Leder fällt dabei insbesondere Naturleder. Aber die Erfindung kann sich auch auf Kunstleder mit glatter Außenoberfläche oder Wildlederimitat wie Alcantara® beziehen. Da die Abdeckung beim Öffnen des Gassack-Moduls aufreißt, soll die außenseitige Lederabdeckung dem Aufreißen möglichst wenig Widerstand entgegensetzen. Zudem soll das Aufreißen längs vordefinierter Aufreißlinien erfolgen. Das Öffnen der Abdeckung muß ferner bei möglichst geringen Kräften, die in engen Grenzen und über einen Temperaturbereich von - 40°C bis 80°C vorbestimmbar sein sollen, erfolgen. Hierzu weisen die bekannten Abdeckungen ein zugeschnittenes Leder auf, das längs der Aufreißlinien z.B. durchtrennt und anschließend über einen Papierstreifen wieder miteinander vernäht ist. Das Leder reißt längs des dünnen Papierstreifens bereits bei geringen Kräften. Die Herstellung des für die Abdeckung vorgesehenen Leders ist aber sehr aufwendig, insbesondere die aufzubringenden Nähte sind arbeitsaufwendig und stören gelegentlich auch die Optik. Eine andere Möglichkeit der Herstellung der Aufreißlinien besteht darin, das Leder rückseitig längs breiter Bahnen, die die Aufreißlinien bilden, abzutragen. Dieses flächige Abtragen ist ebenfalls aufwendig und hat zudem den Nachteil, daß sich der abgetragene Bereich vorderseitig abzeichnen kann, was unerwünscht ist. Auch ein Prägen des Leders von der Vorderseite her ist in der Praxis bereits durchgeführt worden, wobei sich auch hier optisch die Aufreißlinien abzeichnen. Allenfalls bis auf die Verbindung mittels des Papierstreifens haben alle mit Leder bezogenen Abdeckungen den Nachteil, daß die notwendige Kraft zum Öffnen der Abdeckung und Aufreißen des Leders über den geforderten Temperaturbereich stark schwankt.

Aus der JP 09 183373 A ist eine gattungsgemäße Abdeckung bekannt. Hierbei hat das Leder auf der Rückseite zur Bildung der Aufreißlinie eine V-förmige, nutartige Ausnehmung.

Aus der DE 690 22 367 T1 ist eine Gassackabdeckung bekannt, deren Außenhaut aus einer flexiblen Vinylfolie besteht, welche dann rückseitig hinterschäumt wird. Die Vinylfolie wird vor dem Hinterschäumen rückseitig geritzt.

Auch die DE 43 44 523 A1 beschreibt das Anritzen einer Außenhaut, bevor diese hinterschäumt wird.

Die WO 00/51851 schließlich offenbart ein Verfahren, bei dem eine Abdeckung mit einem Trägerteil zuerst außenseitig beledert wird. Anschließend wird von der Rückseite des Trägerteils aus in das Trägerteil und ins Leder eine Aufreißlinie geschnitten. Das Trägerteil erhält dadurch keine Vertiefung, sondern nur einen Schnitt.

Die Erfindung schafft eine Abdeckung eines Fahrzeuginsassen-Rückhaltesystems, nach Anspruch 1, mit einem Leder, das auf sehr kostengünstige Weise mit Aufreißlinien versehen werden kann und das längs der Aufreißlinien durch geringe Kräfte über den gesamten obigen Temperaturbereich leicht zerstört werden kann. Die Aufreißlinie wird durch wenigstens einen Einschnitt auf der Rückseite definiert ist, dessen Tiefe geringer als die Dicke des Leders in dem entsprechenden Bereich ist. Dadurch wird das Leder von der Rückseite nicht flächig abgetragen, sondern erhält nur einen dünnen Einschnitt, der aber nicht bis zur Vorderseite reicht, so daß das Leder nicht durchtrennt wird. Die Aufreißlinie zeichnet sich vorderseitig auch nicht ab, und das vorderseitige Styling der Abdeckung wird durch die Aufreißlinie nicht eingeschränkt. Wie sich bei Versuchen herausgestellt hat, ist das Leder über den gesamten Temperaturbereich in wesentlich engeren Grenzen und mittels geringerer Kräfte zerstörbar als dies bei sämtlichen bisher verwendeten Belederungen der Fall ist. Darüber hinaus ist nach dem Einschneiden des Leders keine Nachbearbeitung, wie z.B. ein zusätzliches Vernähen oder Verkleben oder dergl. notwendig, was die Herstellung billig macht.

Das Abdeckteil hat Schwächungslinien, durch die Klappenabschnitte definiert werden, die ein vorbestimmbares Öffnen der Abdeckung im Rückhaltefall ermöglichen sollen. Die Schwächungsbereiche oder Schwächungslinien sind in unmittelbarer Nähe der Aufreißlinien im Leder angeordnet oder grenzen unmittelbar an diese an. Die Schwächungslinien sind linienförmige Vertiefungen auf der Rückseite des aus Kunststoff ausgebildeten Abdeckteils.

Die Erfindung betrifft ferner ein Verfahren zum einer Abdeckung eines Fahrzeuginsassen-Rückhaltemoduls, wobei das Leder eine Vorder- und eine Rückseite aufweist und wenigstens eine vorgegebene Aufreißlinie, die beim Öffnen der Abdeckung ein definiertes Reißen des Leders ermöglicht. Das erfindungsgemäße Verfahren sieht vor, das Leder von der Rückseite zur Bildung der Aufreißlinie einzuschneiden, ohne Lederteile herauszutrennen oder abzuschaben, wobei die Tiefe des Einschnitts geringer als die Dicke des Leders im Bereich des Einschnittes ist.

Der Einschnitt erfolgt z.B. mittels einer frei programmierbaren, wenigstens drei Achsen aufweisenden, bahngesteuerten Vorrichtung, d.h. es können mit derselben Vorrichtung auch schnell andere Geometrien der Aufreißlinie erzeugt werden. Vorzugsweise erfolgt in derselben Vorrichtung auch der Zuschnitt des Leders, wobei hier die Vorrichtung zur Erzeugung des Zuschnittes tiefer schneidet und das Leder durchtrennt.

Vorrichtung hat wenigstens ein Schneidmesser, dessen Abnutzung mittels einer Vermessungseinrichtung ermittelt wird. Die Vorrichtung ist so ausgebildet, daß die Abnützung des Schneidmessers ermittelt und kompensiert wird, so daß sie die Schnittiefe selbständig auf die gewünschte Tiefe nachstellt. Ansonsten bestünde die Gefahr, daß gegen Ende der Standzeit des Schneidmessers Einschnitte mit zu geringer Tiefe erzeugt werden.

Vorzugsweise hat die Vorrichtung auch eine drehbare Achse, an der das Schneidmesser angebracht ist, so daß das Schneidmesser immer parallel zur Bahn ausgerichtet ist und die Querkräfte auf das Messer auf ein Minimum reduziert sind.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Ansicht der Rückseite eines zugeschnittenen Leders, das bei der Abdeckung nach der Erfindung verwendet wird,
Figur 2 eine perspektivische Ansicht einer erfindungsgemäßen Abdeckung eines Gassack-Moduls, bei dem das in Figur 1 gezeigte Leder die Außenseite der Abdeckung bildet,
Figur 3 eine vergrößerte Querschnittsansicht durch die in Figur 2 gezeigte Abdeckung im Bereich der Aufreißlinie,
Figur 4 den Schneidkopf einer Vorrichtung, mit dem Schneidmesser bei der Durchführung des erfindungsgemäßen Verfahrens, und
Figur 5 eine stilisierte Ansicht der Vorrichtung.

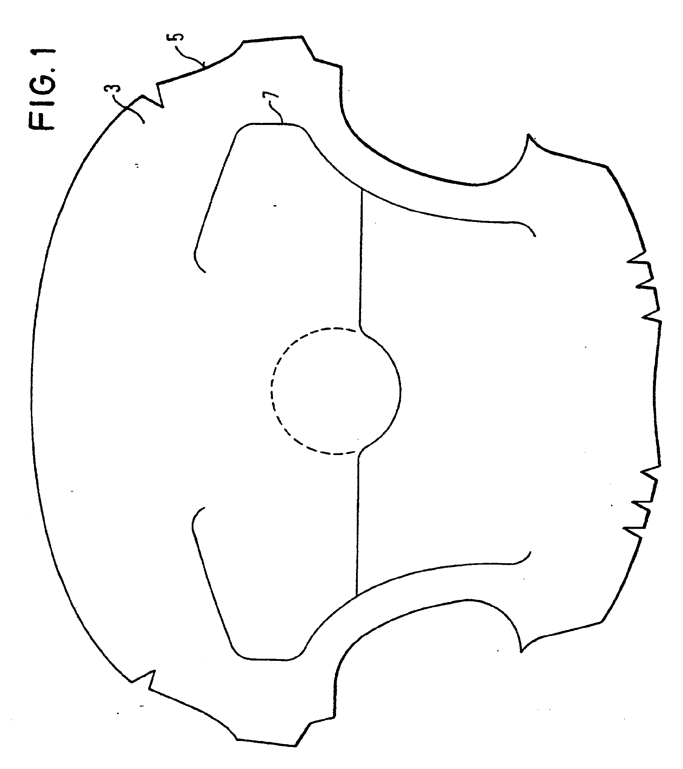

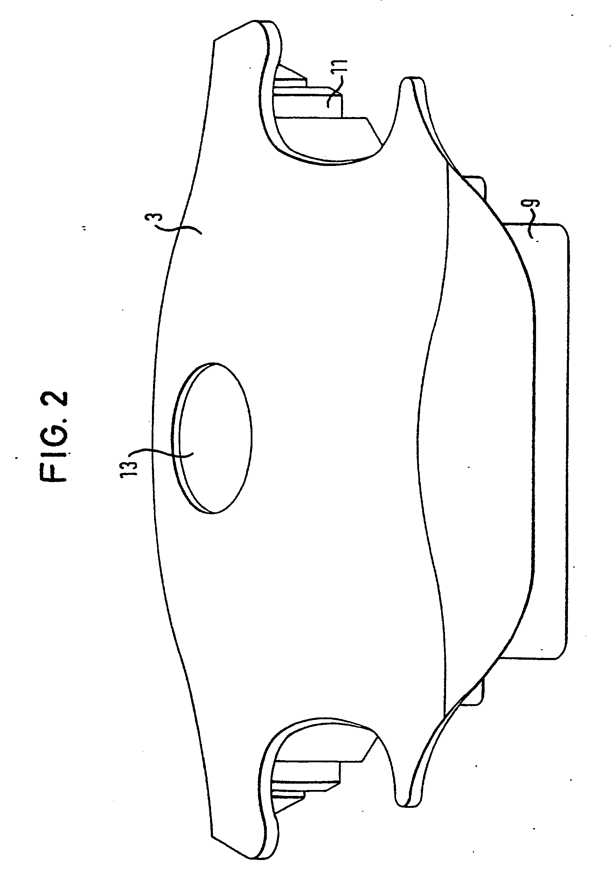

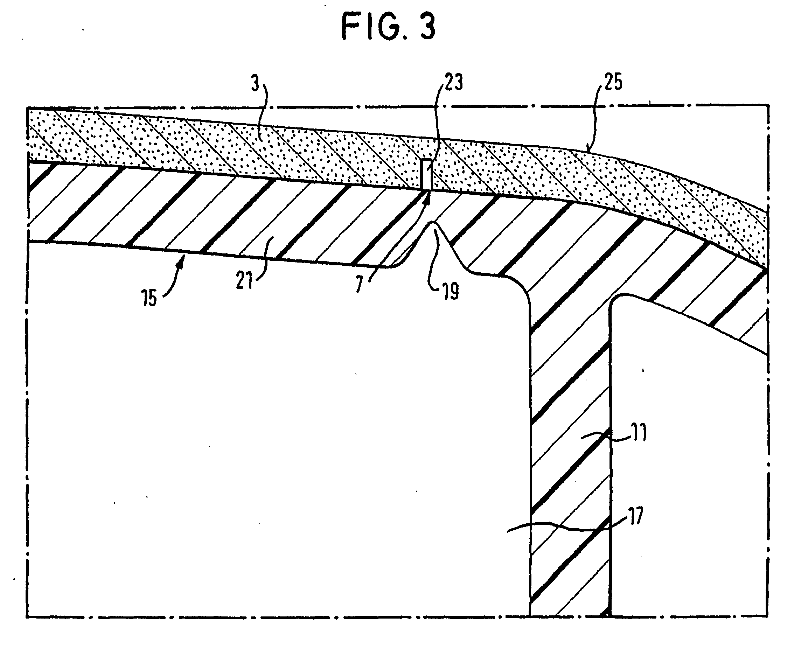

In Figur 1 ist ein zugeschnittenes Leder 3 in ausgebreitetem Zustand dargestellt, das auf die Außenseite eines Abdeckteils eines Fahrer-Gassackmoduls aufgebracht wird. Das Leder hat einen seine Außenkontur bestimmenden Außenrand 5 und auf der Rückseite eine aus mehreren Abschnitten zusammengesetzte Aufreißlinie 7, die das Leder an dieser Stelle schwächt und ein leichtes Zerreißen des Leders im Bereich der Aufreißlinie 7 mittels geringer, in engen Grenzen vorbestimmbarer Kräfte ermöglicht. Die Aufreißlinie wird durch einen Einschnitt von der in Figur 1 sichtbaren Rückseite aus gebildet, der auch in Verbindung mit Figur 3 noch näher erläutert wird. In Figur 2 ist die Abdeckung selbst zu sehen, die mit dem in Figur 1 dargestellten zugeschnittenen Leder bestückt ist. Die Abdeckung besteht aus einem Kunststoffteil 9, mit einer Vorderseite, wobei die Vorderseite mit dem Leder 3 bezogen ist, einer offenen, nicht dargestellten Rückseite sowie Seitenwänden 11. Die in Figur 2 dargestellte Vertiefung 13 ist eine Einprägung, in der ein Emblem untergebracht wird.

In Figur 3 ist ein Schnitt durch die belederte Abdeckung nach Figur 2 im Bereich der Aufreißlinien dargestellt. An die Seitenwände 11 grenzt an der Vorderseite der Abdeckung die Vorderwand, im folgenden flächiges Abdeckteil 15 genannt, an. Auf das Abdeckteil 15 ist außenseitig das Leder 3 geklebt. Das flächige Abdeckteil 15 weist auf der Rückseite, also der zum Hohlraum 17 zur Unterbringung des Gassacks gewandten Seite einen Schwächungsbereich oder eine Schwächungslinie 19 in Form einer V-förmigen Vertiefung auf. Diese Schwächungslinie 19 grenzt unmittelbar an die Aufreißlinie 7 des Leders an und verläuft parallel zu dieser. Durch die Schwächungslinie 19 ergeben sich in der Abdeckung Klappenabschnitte 21, die ein vorbestimmbares Öffnen der Abdeckung im Rückhaltefall ermöglichen. Längs der Schwächungslinien wird die Abdeckung aufgerissen, und die entstehenden Klappen schwenken um die ohne Schwächungslinie ausgebildeten Bereiche nach außen auf.

In Figur 3 ist gut zu erkennen, wie die Schwächungslinie 7 im Leder 3 gebildet wird. Ihre Herstellung erfolgt nämlich mittels eines Einschnitts 23, der nur zur Verdeutlichung in Figur 3 breit dargestellt ist. In Wirklichkeit wird der Einschnitt mittels eines Messers hergestellt, ohne daß Lederabschnitte abgetragen werden, weshalb der Einschnitt im Querschnitt gesehen eigentlich nur durch eine kurze Linie dargestellt werden dürfte. Der Einschnitt weist eine Tiefe auf, die geringer als die Dicke des Leders 3 in dem entsprechenden Bereich des Einschnitts 23 ist. Damit erstreckt sich der Einschnitt 23 nicht bis zur Vorderseite 25 des Leders 3, und das Leder 3 wird folglich durch den Einschnitt 23 auch nicht durchschnitten. Von der Vorderseite des Moduls aus (vgl. Figur 2) ist weder der Einschnitt 23 noch die Schwächungslinie 19 zu sehen. Die im Bereich des Einschnitts 23 verbleibende Dicke des Leders beträgt nur 0,1 bis etwa 0,5 mm, wogegen die ansonsten vorherrschende Dicke etwa 1 mm beträgt.

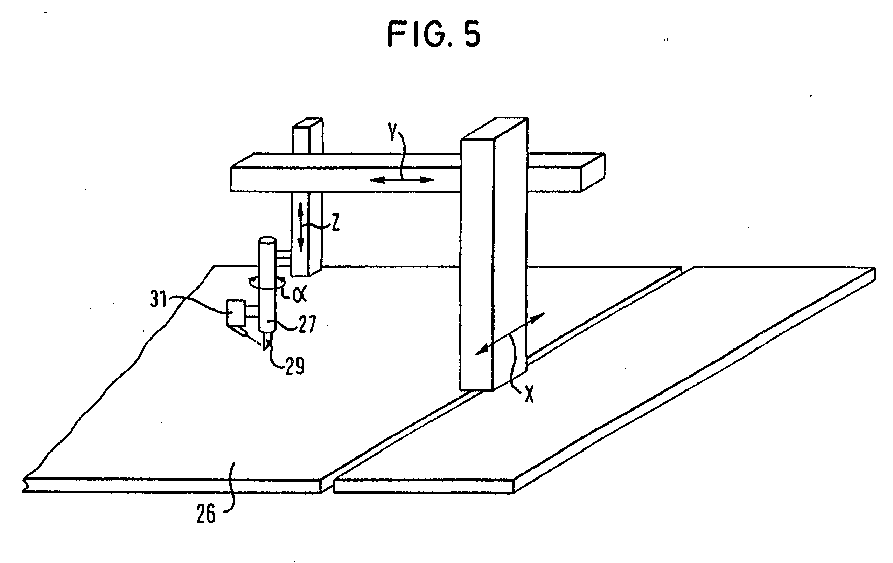

Die Herstellung des Zuschnitts für das Leder erfolgt durch eine in Figur 5 schematisch dargestellte, frei programmierbare, bahngesteuerte, 4-achsige Vorrichtung. Die Vorrichtung hat einen Auflagetisch 26, auf dem das zuzuschneidende und mit Aufreißlinien zu versehende Leder in großen Bahnen aufgespannt wird. In der Ebene des Auflagetisches 26 kann die Vorrichtung in X- und in Y-Richtung verstellt werden. Zudem ist eine Verstellung in Z-Richtung, d.h. eine Höhenverstellung für die Einschnittiefe möglich. Der Schneidkopf 27 ist mit einem Schneidmesser 29 versehen und um die Z-Achse drehbar, so daß die Winkelstellung des Schneidmessers 29 stets parallel zur programmierten Schneidbahn ist. Ferner ist eine Vermessungseinrichtung 31 schematisch dargestellt, mittels der die Abnutzung des Schneidmessers 29 erfaßt wird, sobald das Schneidmesser aus dem Leder herausgefahren ist.

Die Vorrichtung sorgt nicht nur für die Einschnitte 23 im Leder, sondern schneidet aus der Lederbahn auch mehrere Lederteile 3 für mehrere Abdeckungen aus, indem für diesen Zweck das Schneidmesser 29 tiefer eingestellt wird, um den Außenrand 5 zu erzeugen.

Die Vermessungseinrichtung erfaßt die Abnutzung des Schneidmessers 29 und kompensiert sie, so daß die gewünschte Tiefe des Einschnitts 23 auch über die gesamte Standzeit des Messers gleich bleibt. Dies erfolgt dadurch, daß das Messer einfach, nachdem es eine gewisse Abnutzung erfahren hat, geringfügig nach unten verfahren wird.

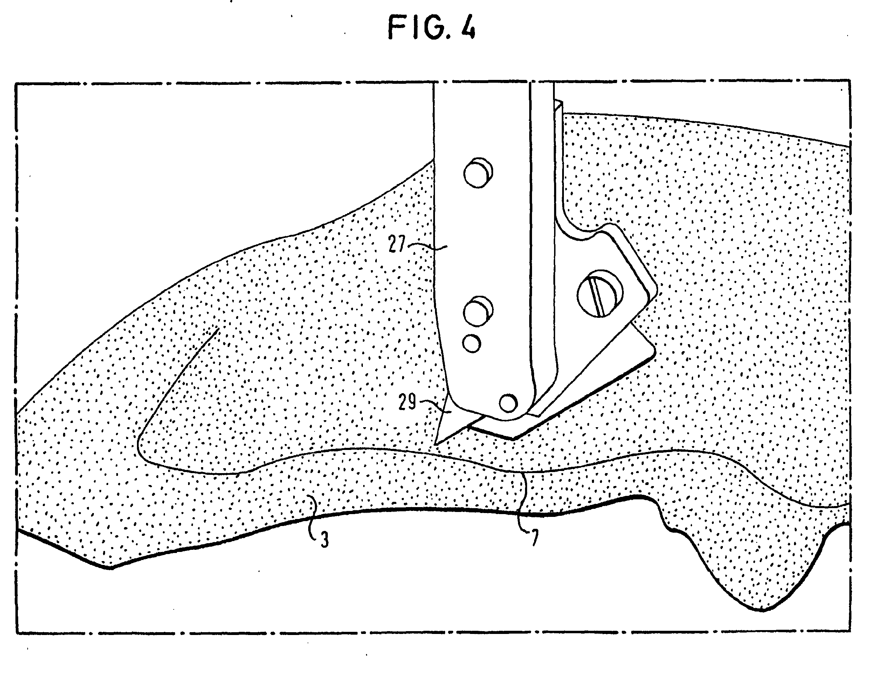

In Figur 4 ist der Schneidkopf mit dem Schneidmesser 29 beim Zuschneiden des Leders 3 zu sehen.

## Patentansprüche

1. Abdeckung für ein Fahrzeuginsassen-Rückhaltemodul,
mit einem flächigen Abdeckteil (15) und einem außenseitig am Abdeckteil (15) befestigten Leder (3), das eine Vorder- (25) und eine Rückseite aufweist und mit der Rückseite an der Abdeckung befestigt ist,
wobei das Leder (3) wenigstens eine Aufreißlinie (7) zum Öffnen der Abdeckung aufweist und längs der Aufreißlinie (7) geschwächt ist,
wobei das Abdeckteil (15) durch Schwächungslinien (19) definierte Klappenabschnitte (21) aufweist, die ein vorbestimmbares Öffnen der Abdeckung im Rückhaltefall ermöglichen, und
wobei
die Aufreißlinie (7) durch wenigstens einen Einschnitt (23) auf der Rückseite definiert ist, und wobei die Tiefe des Einschnitts (23) geringer als die Dicke des Leders (3) im entsprechenden Bereich ist, **dadurch gekennzeichnet, daß** der Einschnitt (23) ohne flächigen Abtrag des Leders (3) oder Lederteile herauszutrennen erfolgt, und, **daß** die Schwächungslinien (19) als linienförmige Vertiefungen in dem aus Kunststoff bestehenden Abdeckteil ausgebildet sind.

2. Abdeckung nach Anspruch 1, **dadurch gekennzeichnet, daß** die Schwächungsbereiche oder Schwächungslinien (19) in unmittelbarer Nähe der Aufreißlinien (7) des Leders (3) angeordnet sind.

3. Abdeckung nach einem der Ansprüche 1 und 2, **dadurch gekennzeichnet, dass** das Leder (3) am Einschnitt (23) noch eine verbleibende Lederdicke von etwa 0,1 bis etwa 0,5 mm hat.

4. Verfahren zum Herstellen einer Abdeckung eines Fahrzeuginsassen-Rückhaltemoduls, mit einem mit Leder (3) bedeckten Abdeckteil (15) **gekennzeichnet durch** folgende Schritte:
a) ein Leder (3) mit einer Vorder- (25) und einer Rückseite wird von der Rückseite aus zur Bildung einer Aufreißlinie (7) so tief, ohne flächigen Abtrag des Leders (3) oder Lederteile herauszutrennen, eingeschnitten, dass der entstehende Einschnitt (23) eine Tiefe hat, die geringer als die Dicke des Leders (3) im Bereich des Einschnitts (23) ist,
b) an der Außenseite des Abdeckteils (15) wird das Leder (3) mit seiner Rückseite befestigt.

5. Verfahren nach Anspruch 4, **dadurch gekennzeichnet, dass** das Leder (3) im aufgespannten Zustand rückseitig eingeschnitten wird.

6. Verfahren nach Anspruch 4 oder 5, **dadurch gekennzeichnet, dass** das Leder (3) mittels eines verfahrbaren Schneidmessers (29) eingeschnitten wird, dessen Abnutzung erfasst und kompensiert wird, indem das Schneidmesser (29) in Richtung der Schnittiefe nachgestellt wird.

7. Verfahren nach Anspruch 6, **dadurch gekennzeichnet, daß** bei Abnutzung des Schneidmessers (29) die Schnittiefe selbständig auf die gewünschte Tiefe nachgestellt wird.

8. Verfahren nach einem der Ansprüche 6 und 7, **dadurch gekennzeichnet, daß** der Einschnitt (23) mittels einer frei programmierbaren, wenigstens drei Achsen aufweisenden, bahngesteuerten Vorrichtung erfolgt.

9. Verfahren nach Anspruch 8, **dadurch gekennzeichnet, daß** die Vorrichtung einen drehbaren Schneidkopf (27) aufweist, an dem das Schneidmesser (29) angebracht ist.

## Claims

1. A cover for a vehicle occupant restraint module,
comprising a sheet-like covering part (15) and a leather (3) secured to the outer face of the covering part (15), the leather (3) having a front side (25) and a back side and being secured by its back side to the cover,
the leather (3) having at least one tear line (7) for opening the cover and being weakened along the tear line (7),
the covering part (15) having flap sections (21) defined by weakening lines (19) to permit a predeterminable opening of the cover in a restraint situation, and
the tear line (7) being defined by at least one incision (23) on the back side, and the depth of the incision (23) being less than the thickness of the leather (3) in the corresponding portion,
**characterized in that** the incision (23) is performed without skiving of the leather (3) or detaching any parts of the leather, and that the weakening lines (19) are configured as linear recesses in the covering part made of a plastic material.

2. The cover as set forth in claim 1, **characterized in that** the weakening portions or weakening lines (19) are disposed in the immediate vicinity of the tear lines (7) in the leather (3).

3. The cover as set forth in either of claims 1 and 2, **characterized in that** at the incision (23) the leather (3) has a remaining leather thickness of approximately 0.1 to approximately 0.5 mm.

4. A method of manufacturing a cover of a vehicle occupant restraint module, comprising a covering part (15) covered with leather (3),
**characterized by** the following steps:
(a) incising the back side of a leather (3) having a front side (25) and a back side to form a tear line (7), without skiving of the leather (3) or detaching any parts of the leather, to such a depth that the resulting incision (23) has a depth that is less than the thickness of the leather (3) in the region of the incision (23),
(b) securing the leather (3) by its back side to the outer face of the covering part (15).

5. The method as set forth in claim 4, **characterized in that** the leather (3) is incised on the back side in the clamped condition.

6. The method as set forth in claim 4 or 5, **characterized in that** the leather (3) is incised by means of a movable cutting knife (29), the wear of which is detected and compensated for by readjusting the cutting knife (29) in the direction of the depth of cut.

7. The method as set forth in claim 6, **characterized in that** the depth of cut is automatically readjusted to the desired depth upon wear of the cutting knife (29).

8. The method as set forth in either of claims 6 and 7, **characterized in that** the incision (23) is made by means of a freely programmable, contour-controlled apparatus having at least three axes.

9. The method as set forth in claim 8, **characterized in that** the apparatus includes a rotatable cutting head (27) to which the cutting knife (29) is attached.

## Revendications

1. Couvercle pour un module de retenue de passager de véhicule,
comportant une partie de recouvrement (15) en forme de feuille et du cuir (3) fixé sur la face extérieure de la partie de recouvrement (15), lequel présente une face avant (25) et une face arrière et est fixé par la face arrière sur le couvercle,
le cuit (3) présentant au moins une ligne de déchirement (7) pour ouvrir le couvercle et est affaibli le long de la ligne de déchirement (7),
la partie de recouvrement (15) présentant des tronçons de rabattement (21) définis par des lignes d'affaiblissement (19), lesquels permettent une ouverture susceptible d'être prédéterminée du couvercle en cas de retenue, et
la ligne de déchirement (7) étant définie par au moins une incision (23) sur la face arrière et la profondeur de l'incision (23) étant inférieure à l'épaisseur du cuir (3) dans la région correspondante, **caractérisé en ce que** l'incision (23) est effectuée sans peler le cuir ou sans découper des parties de cuir, et **en ce que** les lignes d'affaiblissement (19) sont réalisées en tant que creux en forme de lignes dans la partie de recouvrement en matière plastique.

2. Couvercle selon la revendication 1, **caractérisé en ce que** les zones d'affaiblissement ou les lignes d'affaiblissement (19) sont agencées a proximité directe des lignes de déchirement (7) du cuir (3).

3. Couvercle selon l'une des revendications 1 et 2, **caractérisé en ce qu'**au niveau de l'incision (23), le cuir (3) a encore une épaisseur de cuir restante d'environ 0,1 à 0,5 mm.

4. Procédé de fabrication d'un couvercle d'un module de retenue de passager de véhicule, comportant une partie de recouvrement (15) recouverte de cuir (3), **caractérisé par** les étapes suivantes :
a) du cuir (3) présentant une face avant (25) et une face arrière est incisé depuis la face arrière pour former une ligne de déchirement (7), si profondément et sans peler le cuir (3) ou sans découper des parties de cuir, de telle sorte que l'incision (23) produite a une profondeur qui est plus faible que l'épaisseur du cuir (3) dans la région de l'incision (23),
b) le cuir (3) est fixé par sa face arrière sur la face extérieure de la partie de recouvrement (15).

5. Procédé selon la revendication 4, **caractérisé en ce que** le cuir (3) est incisé sur la face arrière à l'état tendu.

6. Procédé selon la revendication 4 ou 5, **caractérisé en ce que** le cuir (3) est incisé au moyen d'un couteau (29) déplaçable dont l'usure est détectée et compensée en réajustant le couteau (29) en direction de la profondeur de coupe.

7. Procédé selon la revendication 6, **caractérisé en ce que** lorsque le couteau (29) est usé, la profondeur de coupe est réajustée automatiquement à la profondeur souhaitée.

8. Procédé selon l'une des revendications 6 et 7, **caractérisé en ce que** l'incision (23) est effectuée au moyen d'un dispositif à trajet commandé librement programmable présentant au moins trois axes.

9. Procédé selon la revendication 8, **caractérisé en ce que** le dispositif présente une tête de coupe (27) rotative sur laquelle est monté le couteau (29).
